# EUROPEAN PATENT SPECIFICATION

(11) **EP 2 180 544 B1**
(45) Date of publication and mention of the grant of the patent: **08.02.2017**
(21) Application number: 09013386.9
(22) Date of filing: 22.10.2009
(51) Int. Cl.: B60R 25/102, G01S 19/16, H01Q 1/32

(54) **Motorcycle**
Motorrad
Motocyclette

(30) Priority: 24.10.2008 JP 2008274896; 11.09.2009 JP 2009210758
(43) Date of publication of application: 28.04.2010
(73) Proprietor: Yamaha Hatsudoki Kabushiki Kaisha, Shizuoka-ken Shizuoka 438-8501 (JP)
(72) Inventor: Endo, Masato, Iwata-shi Shizuoka-ken 438-8501 (JP)
(74) Representative: Grünecker Patent- und Rechtsanwälte PartG mbB

(56) References cited:
- EP-A- 1 247 706
- EP-A- 1 972 534
- US-A1- 2007 023 216

## Description

The present invention relates to a motorcycle according to the preamble of independent claim 1. Such a motorcycle can be taken from the prior art document US 2007/0023216 A1.

JP 2002-362448 A discloses an arrangement in which a motorcycle is provided with a device arranged to inform about a theft by radio transmission. More specifically, an anti-theft device that informs about the location of a stolen vehicle using a positioning system such as GPS (Global Positioning System) and PHS (Personal Handy-phone System) is provided in a helmet storing box for which the seat that can be locked serves as an operable lid. In this way, the device can be provided in a place hardly discoverable by a stranger without unlocking the lid while the owner can easily check the indicator by opening the lid, and rainwater can be prevented from coming in. The anti-theft device is stored in a case and then provided, so that the device can be even more vibration-proof and waterproof, and a window is provided to allow the indicator to be visually recognized.

An anti-theft device is preferably provided in a hardly discoverable place. If a criminal who stole a motorcycle finds the anti-theft device and removes it from the motorcycle, the owner can no longer track the location of the stolen vehicle.

According to the disclosure of the above document, an anti-theft device is attached at a corner of a small item storage formed under a rear seat. When the rear seat is locked, anybody other than the owner cannot look into the small item storage. Therefore, the anti-theft device is hardly discovered.

If however the rear seat is unlocked or the lock device is broken, anybody else can easily find the anti-theft device in the small item storage.

Furthermore, an anti-theft device is preferably positioned to obtain the highest possible receiving sensitivity. However, the disclosed document does not mention anything about the point.

Prior art document EP 1 247 706 A2 discloses an anti-theft device installation structure for motorcycle. Accordingly, a structure is provided for installing in a motorcycle an anti-theft device capable of reporting its position by wirelessly transmitting at least identifying information utilizing the GPS or PHS positioning system. The structure includes a receptacle and an openable cover that can be locked to secure the receptacle, and the anti-theft device is installed in the receptacle. The receptacle can be a helmet box formed in the motor cycle and cover the can be an openable and lockable motorcycle seat. The structure conceals the anti-theft device, protects it from vibration and invasion of rainwater, and can include a case with enhanced waterproofing capability in which the anti-theft device is accommodated so that an indicator thereof is visible through a transparent window.

It is an objective of the present invention to provide a motorcycle as indicated above equipped with a GPS unit arranged in a hardly discoverable location which at the same time allows a sufficient receiving sensitivity.

According to the present invention, said objective is solved by a motorcycle having the features of independent claim 1. Preferred embodiments are laid down in the dependent claims.

Accordingly, it is provided a motorcycle, comprising a frame, an engine provided under the frame, a seat provided above the frame, a storage box provided in a position higher than the engine and under the seat; and a fuel tank provided behind the storage box, wherein the storage box comprises a storage case
with an opening at its upper end, a first storage room provided at an upper part of the storage case, a second storage room provided under the first storage room in the storage case and separated from the first storage room, and a Global Positioning System (GPS) unit including at least an antenna and provided in the second storage room.

As the engine and the fuel tank are not provided above the GPS unit, and therefore degradation in the receiving sensitivity of the antenna is reduced. Furthermore, the GPS unit is stored in the second storage room separated from the first storage room such that the GPS cannot easily be discovered. Therefore, a motorcycle including a GPS unit provided in a hardly discoverable position where the receiving sensitivity is not easily degraded can be provided.

The frame has a front frame extending obliquely downward from a front to a back of the motorcycle and a rear frame extending obliquely upward from the front frame to the back.

Further, preferably the engine is provided under a rear part of the front frame, and/or the seat is provided above the rear frame.

Still further, preferably the storage box further comprises a first partition plate provided between the first and second storage rooms to separate the first storage room from the second storage room.

Preferably, the GPS unit further comprises a GPS receiver configured to calculate positional information based on a GPS signal received by the antenna, and a position transmitter configured to transmit a position signal indicating the positional information calculated by the GPS receiver from the antenna.

Further, the antenna is provided in a position equal to or higher than the frame, respectively the rear frame.

Still further, preferably the GPS unit has a substantially flat shape and is laid.

Preferably, the storage box further comprises a third storage room provided under the second storage room in the storage case and being separated from the first and second storage rooms.

According to a preferred embodiment, the storage box further comprises a second partition plate provided between the second and third storage rooms to separate the second storage room from the third storage room, and, preferably, the second partition plate has a through hole, a battery is provided in the third storage room, and a wire passes through the through hole and connects the GPS unit and the battery.

Preferably, the first and second partition plates are attached to the storage case in a detachable manner, and, preferably, the GPS unit is attached to the second partition plate.

Further, preferably the second partition plate further comprises a support member provided upright on a surface of the second partition plate, and, preferably, the GPS unit is supported by the support member and apart from the second partition plate.

According to another preferred embodiment, the storage case has a width gradually reduced toward the front, the GPS unit preferably further comprises a unit case having a side surface provided with a connector to which the wire is connected and storing the antenna, the GPS receiver, and the position transmitter, the GPS unit is preferably attached to the second partition plate, and when the GPS unit is attached to the second partition plate, the side surface is preferably opposed to an inner side surface of the storage case, a distance between a side surface and an inner side surface of the storage case is reduced toward the front, the connector is provided more on the rear side than the center of the side surface, and the antenna is provided in an upper part of the unit case.

Preferably, the second partition plate is provided in a position substantially equal to or higher than the rear frame.

In the following, the present invention is explained in greater detail by means of embodiments thereof in conjunction with the accompanying drawings, wherein:
Fig. 1 is a functional block diagram showing the structure of an entire anti-theft system for use in a motorcycle according to a preferred embodiment.
Fig. 2 is a left side view of the structure of the entire motorcycle according to the preferred embodiment.
Fig. 3 is a right side view showing the structure of a storage box and its periphery in the motorcycle shown in Fig. 2.
Fig. 4 is an exploded perspective view of the storage box in Fig. 2.
Fig. 5 is a plan view showing the structure of the storage box and its periphery in the motorcycle shown in Fig. 2.
Fig. 6 is a fragmentary sectional view taken along line VI-VI in Fig. 5.
Fig. 7 is a fragmentary sectional view taken along line VII-VII in Fig. 5.

Now, preferred embodiments will be described in detail in conjunction with the accompanying drawings in which the same or corresponding portion are designated by the same reference characters and their description will not be repeated. In the following description, the "front-back" and "right and left" refer to these directions viewed from a rider seated on the seat.

To start with, an anti-theft system for use in a motorcycle according to a preferred embodiment will be described.

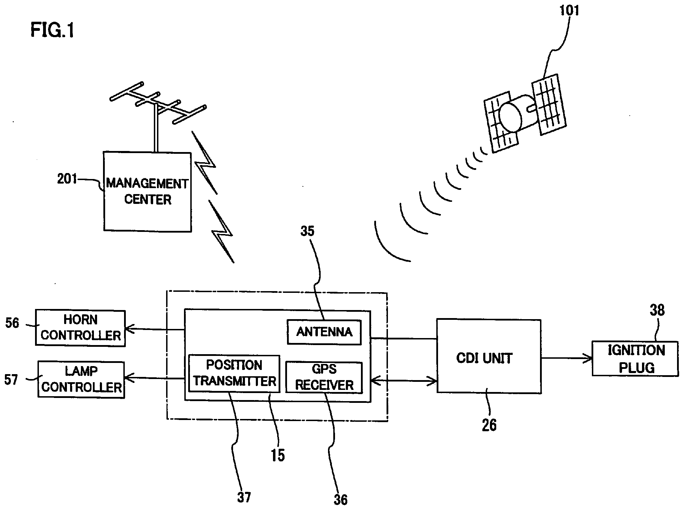

Fig. 1 is a functional block diagram showing the structure of the entire anti-theft system. With reference to Fig. 1, the anti-theft system includes a Global Positioning System (GPS) unit 15 provided in the motorcycle, a GPS satellite 101, and a management center 201.

The GPS unit 15 includes an antenna 35, a GPS receiver 36, and a position transmitter 37. The antenna 35 receives GPS signals transmitted from the GPS satellite 101. The GPS receiver 36 calculates positional information based on the GPS signals received by the antenna 35. The GPS unit 15 is provided in the motorcycle and therefore the GPS receiver 36 produces the positional information of the motorcycle.

The GPS unit 15 stores the identification information of the motorcycle in a memory that is not shown. The position transmitter 37 transmits a position signal indicating positional information and an identification signal indicating identification information from the antenna 35. The management center 201 receives the position signal and the identification signal and manages the positional information and the identification information.

The GPS unit 15 is connected to a CDI (Capacitor Discharge Ignition) unit 26, a horn controller 56 and a lamp controller 57. The GPS unit 15 controls the ignition plug 38 of the engine through the CDI unit 26. The GPS unit 15 further activates a horn or flashes a lamp through the horn controller 56 and the lamp controller 57.

When a motorcycle is stolen, the rider of the motorcycle informs the management center 201 of the fact. The management center 201 keep receiving position signals and identification signals transmitted from the GPS unit 15 of the stolen motorcycle. Therefore, the management center 201 can specify the location of the motorcycle and track down the vehicle.

The management center 201 controls the stolen motorcycle. More specifically, the management center 201 transmits an alarm command to the GPS unit 15. The GPS unit 15 controls the horn controller 56 in response to the alarm command and activates the horn. The GPS unit 15 controls the lamp controller 57 in response to the alarm command and flashes the lamp. In this way, people around the motorcycle can be aware that the motorcycle is a stolen vehicle.

The management center 201 further transmits a stop command to the GPS unit 15. The GPS unit 15 responds to the stop command and controls the CDI unit 26 so that the ignition plug 38 is not operated. In this way, the engine is stopped.

The GPS unit 15 does not have to be connected to the CDI unit 26. In this case, the GPS unit 15 does not control the CDI unit 26.

Now, a motorcycle according to the present preferred embodiment will be described.

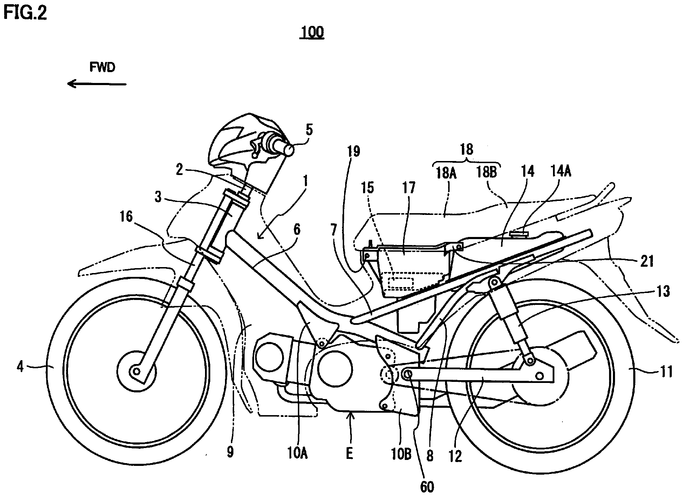

Fig. 2 is a left side view of the motorcycle 100 facing forward (FWD). With reference to Fig. 2, the motorcycle 100 includes a frame 1, an engine E, a seat 18, a storage box 17, a fuel tank 14, a front wheel 4, and a rear wheel 11.

The frame 1 is provided in a lower position than the frame of a general saddle type motorcycle. The frame 1 is a so-called under bone type frame.

The frame 1 includes a head pipe 3, a front frame 6, and a pair of rear frames 7.

The front frame 6 is coupled to the head pipe 3. More specifically, the front frame 6 is coupled to the lower part of the head pipe 3. The front frame 6 extends obliquely downward in the front-back direction from the head pipe 3. The rear frame 7 is coupled to the rear part of the front frame 6. The rear frame 7 extends obliquely upward to the back.

A reinforcement frame 8 is provided at the rear end of the front frame 6. The reinforcement frame 8 is provided under the rear frame 7. The reinforcement frame 8 extends obliquely upward to the back. The rear end of the reinforcement frame 8 is connected to the rear frame 7 approximately in the center. The reinforcement frame 8 supports the rear frame 7. The frame 1 is covered with a plurality of body covers 9. The rear end of the front frame 6 is positioned behind the front end of the seat 18 when seen in a side view. The front end of the rear frame 7 is positioned substantially in the same position as the front end of the seat 18 in the front-back direction when seen in a side view.

A steering shaft 2 is rotatably inserted to the head pipe 3. A handle 5 is fixed to the upper end of the steering shaft 2. A pair of front forks 16 is provided under the head pipe 3. The front wheel 4 is rotatably attached to the lower end of the front forks 16.

The engine E is provided under the rear part of the front frame 6. The engine E is supported by the front frame. More specifically, the engine E is supported by the frame 6 through engine brackets 10A and 10B.

The bracket 10B is provided with a pivot shaft 60. The rear arm 12 is supported so that it can swing in the vertical direction around the pivot shaft 60. The rear wheel 11 is rotatably attached to the rear end of the rear arm 12. A shock absorber 13 is provided between the rear end of the rear arm 12 and the rear frames 7.

The seat 18 is provided above the pair of rear frames 7. The seat 18 includes a main seat 18A and a tandem seat 18B adjacent to the rear end of the main seat 18A. A rider is seated on the main seat 18A. The tandem seat 18B is one step higher than the main seat 18A. A tandem rider is seated on the tandem seat 18B.

The storage box 17 and the fuel tank 14 are provided next to each other in the front-back direction under the seat 18. The storage box 17 is positioned above the engine E and under the front part of the seat 18. More specifically, the storage box 17 is provided under the main seat 18A. The front end surface of the storage box 17 is provided ahead of the rear end surface of the engine E. The fuel tank 14 is provided under the rear part of the seat 18 and behind the storage box 17. More specifically, the fuel tank 14 is provided under the tandem seat 18B.

The fuel tank 14 is a metal tank and stores fuel to be supplied to the engine E. The fuel tank 14 is fixed to the rear frames 7 through brackets that are not shown. The fuel tank 14 includes a supply inlet 14A on the upper surface.

The storage box 17 has an opening at the upper end and stores miscellaneous items or the like belonging to the rider. A hinge 19 is provided at the front end of the storage box 17. The seat 18 is supported rotatably around the hinge 19 at its tip end. When the seat 18 is rotated around the hinge 19 and lifted upright, the opening of the storage box 17 is exposed. In other words, when the seat 18 is lifted upright, the storage box 17 is opened. When the seat 18 is rotated around the hinge 19 and put back, the storage box 17 is closed. A lock device that is no shown in provided at the rear end of the seat 18. The locked seat 18 cannot be rotated and the storage box 17 is not opened.

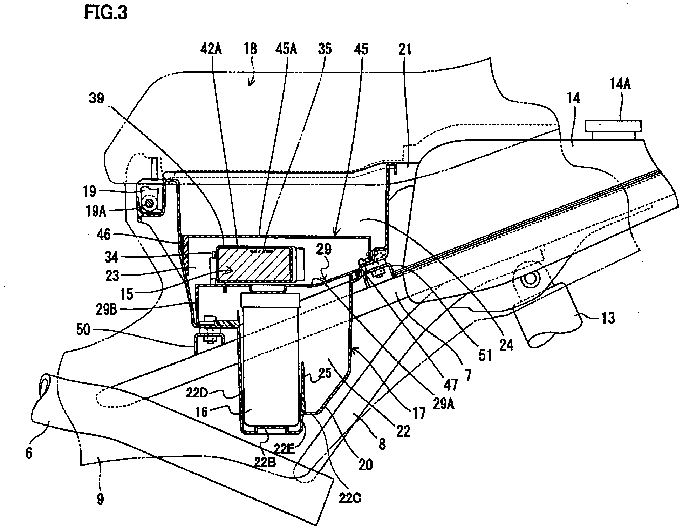

Fig. 3 is a fragmentary sectional view showing the storage box 17 and its periphery in Fig. 2 being enlarged. With reference to Fig. 3, the storage box 17 is fixed to the pair of rear frames 7. Cross bars 50 and 51 are extended between the pair of the rear frames 7. The cross bar 51 is provided behind the cross bar 50. The front part of the bottom surface of the storage box 17 is fixed to the cross bar 50 and the rear part of the bottom surface of the storage box 17 is fixed to the cross bar 51. The lower part of the storage box 17 is held between the pair of rear frames 7. Stated differently, the storage box 17 overlaps the pair of rear frames 7 when seen in a side view. The upper end of the storage box 17 is positioned above the pair of rear frames 7. The lower end of the storage box 17 is positioned under the pair of rear frames 7. The upper part of the rear end of the storage box 17 is coupled to the upper part of the tip end of the fuel tank 14 by brackets 21.

The pair of rear frames 7 extends obliquely upward to the back under the seat 18. Therefore, the space between the bottom of the seat 18 and the pair of rear frames 7 is maximized at the front end of the seat 18 and reduced toward the rear end of the seat 18. As described above, the storage box 17 is provided under the front part of the seat 18 and the fuel tank 14 is provided under the rear part of the seat 18. Therefore, the storage box 17 can have a larger capacity than the case in which the storage box is provided under the rear part of the seat 18.

The storage box 17 includes a storage case 20 and partition plates 45 and 29. The storage box 17 stores the GPS unit 15. The storage box 17 is divided into storage rooms 22 to 24 by the partition plates 45 and 29. The partition plate 45 corresponds to a "first partition plate" according to the present teaching . The partition plate 29 corresponds to a "second partition plate" according to the present teaching . The storage room 24 corresponds to a "first storage room" according to the present teaching. The storage room 23 corresponds to a "second storage room" according to the present teaching. The storage room 22 corresponds to a "third storage room" according to the present teaching. Accordingly, the first storage room 24 is separated from the second storage room 23. The third storage room 22 is separated from at least one of the first and second storage rooms 24, 23, preferably from both of said first and second storage rooms 24, 23.

The storage case 20 is made of synthetic resin and has an opening at its upper end. The storage room 24 is provided above the storage case 20. The storage room 23 is provided under the storage room 24. The storage room 22 is provided under the storage room 23. The partition plate 45 is provided between the storage rooms 24 and 23. The partition plate 29 is provided between the storage rooms 23 and 22. In the storage box 17 three storage rooms placed on one another are formed.

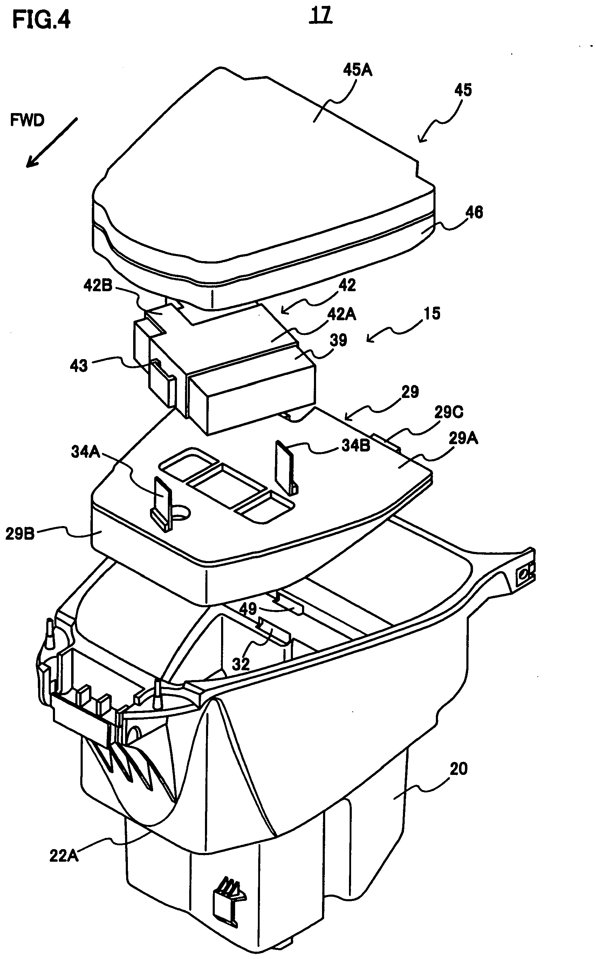

Fig. 4 is an exploded perspective view of the storage box 17. With reference to Fig. 4, the width of the storage box 17 is gradually narrowed toward the front (FWD) from the back of the vehicle. The GPS unit 15 is provided between the partition plates 29 and 45 in the storage case 20. The GPS unit 15 has a flat square shape. The GPS unit 15 is attached horizontally on the partition plate 29. The GPS unit 15 is attached on the partition plate 29 so that the length in the crosswise or front-back direction is greater than the length in the vertical direction. The GPS unit 15 is attached on the partition plate 29 so that its area when seen in a top view is larger than the area in a side view. The GPS unit 15 is attached on the partition plate 29 so that the receiving range of the built-in antenna is directed upward.

Referring back to Fig. 3, the storage room 22 stores a battery 16 and electric equipment that is not shown. The storage room 23 stores the GPS unit 15. The storage room 24 is a small item storage. The storage room 24 stores a raincoat, tools and the like. The partition plate 45 has an upper surface that extends in the front-back direction. The upper surface of the partition plate 45 is substantially flat. More specifically, the bottom surface of the storage room 24 is substantial flat, which is a shape easy to use as a small item storage. The inner surface of the storage room 24 is observable. If there is a raised or recessed part at the bottom surface of the storage room 24, it may suggest that there is equipment such as a GPS unit under the storage room 24. If the bottom surface of the storage room 24 is substantially flat, it is hardly noticed that the GPS unit 15 is stored under the storage room 24.

Now, the structure of the storage box 17 will be described in detail.

As in the foregoing, the storage room 23 stores the GPS unit 15. The bottom surface of the storage room 23 corresponds to the upper surface of the partition plate 29. The ceiling surface of the storage room 23 corresponds to the lower surface of the partition plate 45.

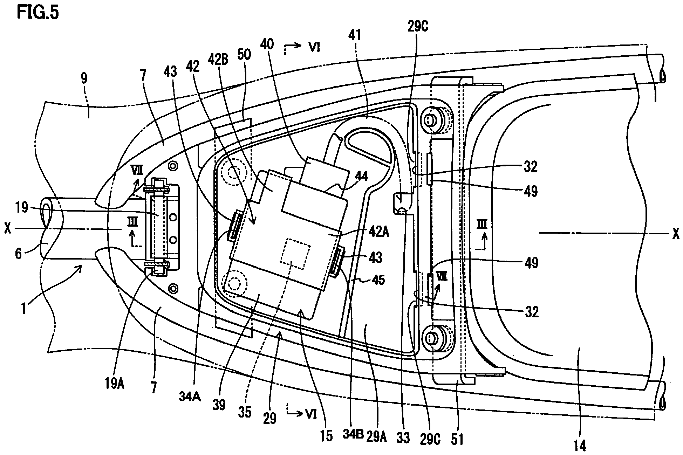

Fig. 5 is a plan view of the storage box 17 removed of the partition plate 45 and its periphery. A sectional view taken along line III-III in Fig. 5 corresponds to Fig. 3. With reference to Figs. 3 to 5, the GPS unit 15 includes a flat square unit case 39, an antenna 35, a GPS receiver 36 (Fig. 1), and a position transmitter 37 (Fig. 1). The unit case 39 stores the antenna 35, the GPS receiver 36, and the position transmitter 37. The material of the unit case 39 is for example synthetic resin. The antenna 35 is sheet shaped and provided at an upper part in the unit case 39 as shown in Fig. 3. As shown in Fig. 5, the antenna 35 is provided between the pair of frames 7 when seen in a top view. Furthermore, the antenna 35 is provided on the left side of the central axis X-X of the vehicle when seen in a top view.

The GPS unit 15 further includes a connector 44 provided on a side of the GPS case 39. The connector 44 is connected with a connector 40 attached to one end of a wire harness 41. The other end of the wire harness 41 is connected to the battery 16 and the electric equipment. The GPS unit 15 is connected to the battery 16 and the electric equipment through the wire harness 41. The GPS unit 15 is powered from the battery 16 and communicates with the CDI unit 26. The GPS unit 15 further includes an auxiliary battery that is not shown in the unit case 39. When no power is supplied from the battery 16, an auxiliary battery is used.

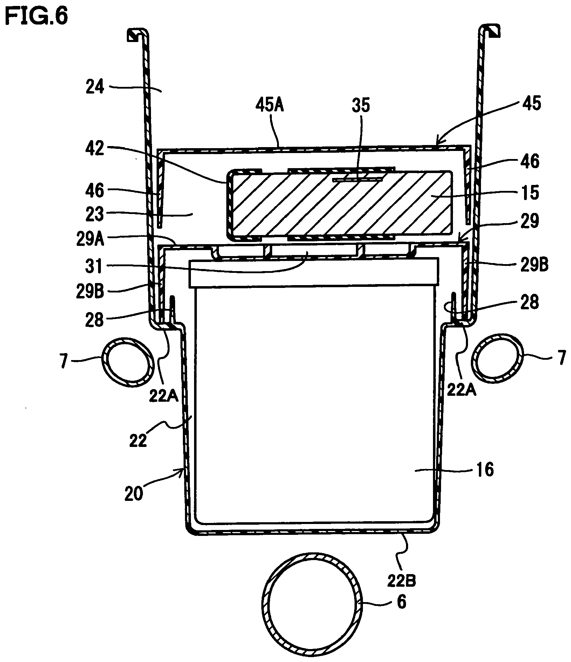

Fig. 6 is a sectional view taken along line VI-VI in Fig. 5. With reference to Fig. 6, the GPS unit 15 is adjacent to the battery 16 through the partition plate 29. Since the GPS unit 15 is provided near the battery 16, the wire harness 41 is short.

Referring back to Fig. 5, a through hole 33 is formed near the rear end of the partition plate 29. The wire harness 41 connects the GPS unit 15 and the battery 16 and the electric equipment through the through hole 33. As described above, the GPS unit 15 and the battery 16 are adjacent to each other through the partition plate 29. The wire harness 41 is passed through the through hole 33 and the space required for providing the harness 41 can be reduced.

A guide rib 45 is provided at the rear part of the partition plate 29. The tip end of the guide rib 45 is curved. The wire harness 41 is curved along the tip end of the guide rib 45 and guided into the through hole 33. The guide rib 45 restricts the bending of the wire harness 41.

An elastic band 42 is wound around the outer surface of the GPS unit 15. The elastic band 42 is for example made of rubber. The elastic band 42 includes band portions 42A and 42B. The band portion 42A is an annular band wrapped around the central parts of a pair of side surfaces of the unit case 39 perpendicular to the side surface provided with the connector 44 and the central parts of the upper and lower surface. The antenna 35 is covered with the band portion 42A.

The band portion 42B connects the upper and lower surfaces of the band portion 42A across the side surface provided with the connector 44. The band portion 42B is provided in a position not overlapping the connector 44. More specifically, the band portion 42B is shifted from the center of the width of the band 42A to the opposite side to the connector 44.

Attachment portions 43 are formed at the outer surfaces of the parts of the band portion 42A that overlap the side surfaces of the unit case 39. The attachment portions 43 each have a square shape and a through hole penetrating in the height-wise direction.

With reference to Figs. 4 and 5, plate shaped support members 34A and 34B are provided upright on the surface of the partition plate 29. The support member 34A is provided upright near the front edge of the partition plate 29 on the central axis X-X. The support member 34B is provided upright behind the support member 34A and on the left side of the central axis X-X. The support members 34A and 34B are inserted into the through holes in the attachment parts 43. In this way, the GPS unit 15 is elastically fixed on the partition plate 29.

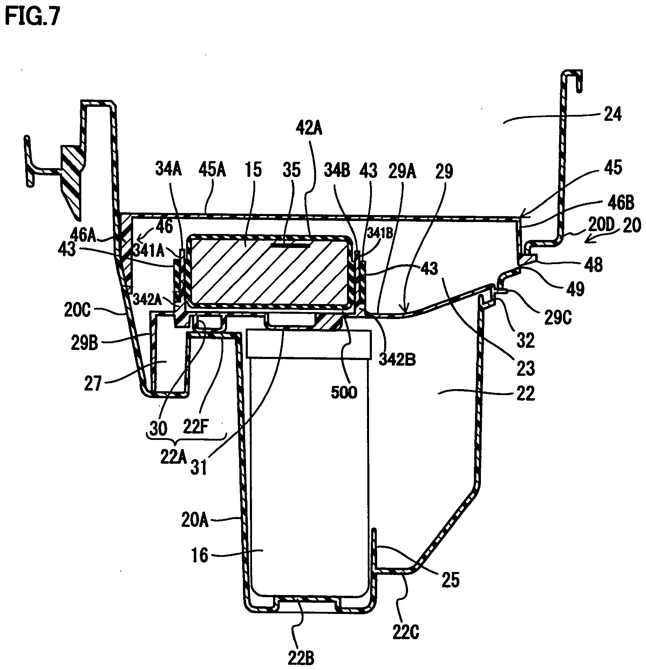

Fig. 7 is a sectional view taken along line VII-VII in Fig. 5. As shown in Fig. 7, the support member 34A includes an insert portion 341A and a support portion 342A. The support portion 342A is adjacent to the lower end of the insert portion 341A. The insert portion 341A and the support portion 342A are integrally formed. The support portion 342A is thicker than the insert portion 341A. Therefore, the support member 34A has a stepped shape. Similarly, the support portion 34B includes an insert portion 341 B and a support portion 342B.

The insert portion 341A is inserted into the through hole of the attachment portion 34. However, the support portion 341 B is thick and therefore cannot be inserted into the through hole of the attachment portion 34. Therefore, the elastic band 42 is not in contact with the upper surface of the partition plate 29 and a gap 500 is formed between the GPS unit 15 and the partition plate 29. The GPS unit 15 is supported by the support members 34A and 34B as it is held up. Therefore, vibration from the motorcycle 100 is not easily transmitted to the GPS unit 15.

The antenna 35 receives GPS signals transmitted from the GPS satellite 101. In order to improve the receiving sensitivity, the antenna 35 is directed upward. It is preferable that less interfering objects that lower the receiving sensitivity are provided above the antenna 35. It is therefore preferable that less metal automotive body parts that interfere with GPS signals are provided above the antenna 35.

When the antenna 35 is provided immediately below the engine E or the fuel tank 14, the receiving sensitivity of the GPS antenna 35 is degraded. Therefore, according to the present preferred embodiment, the GPS unit 15 is provided above the engine E and in front of the fuel tank 14. Therefore, degradation in the receiving sensitivity caused by the engine E and the fuel tank 14 is reduced.

Furthermore, as shown in Fig. 6, the antenna 35 is provided in a position higher than the metal rear frames 7. The receiving sensitivity of the antenna 35 is affected not only by the engine E and the fuel tank 14 but also by the rear frames 7. When the antenna 35 is provided in a position substantially equal to or higher than the rear frames 7, interference by the rear frames 7 is less likely. Therefore, the receiving sensitivity can be improved.

The motorcycle 100 receives external force in the vertical direction from the road surface through the front wheel 4 and the rear wheel 11. Therefore, the front part and the rear part of the frame 1 are moved up and down. As shown in Fig. 3, the GPS unit 15 is provided near the center of the motorcycle 100. Therefore, the GPS unit 15 is less affected by the vertical movement generated in front of and behind the frame 1 and the displacement of the antenna 35 is reduced. Therefore, the antenna receiving sensitivity is improved.

As shown in Fig. 5, when the GPS unit 15 is attached to the partition plate 29, the side surface of the unit case 39 provided with the connector 44 is opposed to the inner side surface of the storage case 20. At the time, the distance between the side surface of the unit case 39 provided with the connector 44 and the inner side surface of the storage case 20 is reduced toward the front side from the rear side. The connector 44 is provided more on the rear side than the center of the side surface of the unit case 39. At the time, the antenna 35 is provided in the upper part of the unit case 39. When the GPS unit 15 is attached upside down to the partition plate 29, the antenna 35 is provided under the unit case and the receiving sensitivity is degraded. However, when the GPS unit 15 is attached upside down to the partition plate 29, the connector 44 is provided more on the front side than the center of the side surface of the unit case 39. As described above, the distance between the side surface of the unit case 39 provided with the connector 44 and the inner side surface of the storage case 20 is narrowed toward the front, and therefore the space used to connect the connector 40 to the connector 44 is reduced. Since it is not easy to connect the connector 40 to the connector 44, the operator realizes that the GPS unit 15 has been attached upside down. Therefore, the possibility of attaching the GPS unit 15 upside down can be reduced.

With reference to Fig. 3, the storage room 22 is provided at the lowermost part of the storage box 17. The storage room 22 stores the battery 16 and electric equipment that is not shown. The electric equipment includes components such as the CDI unit 26, a fuse box, and a relay box.

A partition plate 25 is provided upright at the bottom surface of the storage room 22. The storage room 22 is divided into a front space and a rear space by the partition plate 25. The battery 16 is stored in the front space and the electric equipment is stored in the rear space.

As shown in Figs. 3 and 6, the storage room 22 is held between the pair of the rear frames 7. The bottom of the storage room 22 includes three bottom portions 22A to 22C in the direction from the front to the back.

The bottom portion 22A is formed at the front part and the right and left side parts of the storage room 22. The bottom portion 22B is formed on the inner side of the bottom portion 22A. More specifically, the bottom portion 22B is surrounded by the bottom portion 22A. The bottom portion 22C is provided behind the bottom portion 22B. The bottom portions 22A to 22C are integrally formed.

The bottom portions 22A to 22C have different heights. The bottom portion 22A is higher than the bottom portions 22B and 22C. The bottom portion 22C is higher than the bottom portion 22B. The bottom portion 22B is the lowest.

The bottom portion 22A is fixed to a cross bar 50 by bolts and nuts. The rear end of the bottom portion 22A is connected to the upper end of the side wall 22D. The front end of the bottom portion 22B is connected to the rear end of the side wall 22D. The rear end of the bottom portion 22B is connected to the rear part of the side wall 22E. The tip end of the bottom portion 22C is connected to the upper end of the side wall 22E.

With reference to Figs. 3 and 7, the bottom portion 22A partly has recessed and raised portions. With reference to Fig. 7, a recess 22F is recessed inside the storage room 22. The recess 22F is used to stably support the partition plate 29. With reference to Fig. 6, a partition plate 28 is provided upright near the inner side edge of the inner surface of the bottom portion 22A. The partition plate 28 is used to stably support the partition plate 29.

With reference to Figs. 4, 6, and 7, the partition plate 29 is provided between the storage rooms 23 and 22. The material of the partition plate 29 is synthetic resin. The partition plate 29 includes a floor plate 29A and a plate shaped skirt 29B. The skirt 29B is pendent from the circumferential edge of the floor plate 29A.

With reference to Fig. 4, the floor plate 29A has a shape similar to the opening of the storage box 17, and the width of the floor plate 29A is gradually reduced from the back to the front (FWD). As shown in Figs. 6 and 7, support members 30 and 31 are formed at the back surface of the floor plate 29A.

The support member 30 is formed at the front of the back surface of the floor plate 29A. The support member 30 has a cylindrical shape. The support member 31 is formed in the center of the back surface of the floor plate 29A. The support member 31 has a square shape.

With reference to Figs. 4 and 7, the floor plate 29A further includes a plurality of hooks 29C at the rear end. The rear wall of the storage case 20 has a plurality of openings 32 corresponding to the hooks 29C. When the partition plate 29 is attached to the storage case 20, the hooks 29C are inserted into the openings 32. In this way, the partition plate 29 is supported by the rear wall of the storage case 20.

When the partition plate 29 is supported at the storage case 20 by the hooks 29C, the lower end of the skirt 29B is in contact with the inner surface of the bottom wall portion 22A as shown in Figs. 6 and 7. Furthermore, the support member 30 is in contact with the inner surface of the recess 22F of the bottom wall portion 22A. In addition, the support member 31 is in contact with the upper surface of the battery 16. Therefore, the floor plate 29A is supported substantially horizontally in a stable manner.

As in the foregoing, the hooks 29C, the skirt 29B, and the support members 30 and 31 support the floor plate 29A in a horizontal position. As shown in Fig. 3, since the floor plate 29A is in a higher position than the rear frames 7, the antenna 35 is in a higher position than the rear frames 7. Therefore, degradation in the receiving sensitivity is reduced.

According to the present preferred embodiment, the floor plate 29A is in a higher position than the rear frames 7. However, the floor plate 29A and the rear frames 7 may be at the same height. In short, when the floor plate 29A is provided in a position equal to or higher than the rear frames 7, degradation in the receiving sensitivity of the antenna 35 can be reduced. This is because the antenna 35 is provided in a position higher than the rear frames 7.

With reference to Fig. 7, the partition plate 45 is provided between the storage rooms 24 and 23. The partition plate 45 separates the storage room 24 from the storage room 23. The material of the partition plate 45 is synthetic resin.

The partition plate 45 includes a floor plate 45A and a skirt 46. With reference to Fig. 4, the floor plate 45A has a shape similar to the opening of the storage box 17, and the width of the floor plate 45A is gradually reduced from the back to the front. The floor plate 45A is flat.

The skirt 46 is plate shaped and pendent from the circumferential edge of the floor plate 45A. As shown in Fig. 7, a skirt portion 46A of the skirt 46 that is pendent from the front end of the floor plate 45A (hereinafter referred to as "front end skirt portion") is tapered. More specifically, the tip end of the front end skirt portion 46A is chamfered. A skirt portion 46B pendent from the rear end of the floor plate 45A (hereinafter referred to "rear end skirt portion") has a plurality of hooks 48 at its tip end.

The storage case 20 includes a front wall 20C. The front wall 20C extends obliquely forward and upward from the front end of the bottom wall 22A. The storage case 20 further has a rear wall 20D opposed to the upper part of the front wall 20C, and its rear wall has a plurality of openings 49.

When the partition plate 45 is fitted into the storage case 20, the tip end of the front end skirt portion 46A is in contact with the inner surface of the upper part of the front wall 20C. The hooks 48 are then inserted into the openings 49. The partition plate 45 is made of synthetic resin and therefore has a certain degree of elasticity. The front skirt portion 46A and the hooks 48 press the inner surface of the storage case 20 that are in contact with them. Therefore, the partition plate 45 is fixed to the storage case 20. At the time, the floor plate 45A is provided substantially horizontally.

As shown in Fig. 6, a side surface portion of the skirt 46 is not in contact with the storage case 20. More specifically, the partition plate 45 is attached to the storage case 20 by the front end skirt portion 46A and the hooks 48. Screw holes that are not shown are provided at the front ends of the partition plates 29 and 45. The partition plates 29 and 45 are fastened together by a single bolt (not shown) inserted into the screw holes. When the bolt is removed and the hooks 29 and 48 are removed from the openings 32 and 49, the partition plates 29 and 45 are removed from the storage case 20.

As in the foregoing, the partition plates 29 and 45 are attached to the storage case 20 in a detachable manner. The GPS unit 15 attached to the partition plate 29 can be removed easily from the storage case 20 once the partition plate 29 is removed.

With reference to Fig. 3, the storage room 24 is formed at the uppermost part of the storage case 20. The storage room 24 is separated from the storage room 23 by the partition plate 45. As described above, when the seat 18 is rotated around the hinge 19 and lifted upright, the opening of the storage room 24 is exposed. Then, a rider can place his/her items and the like in the storage room.

As shown in Figs. 3 and 6, the upper surface of the floor plate 45A is flat. Therefore, the floor of the storage room 24 is substantially flat. If the floor of the storage room 24 has irregularities, one might suspect the presence of the anti-theft device hidden under the floor of the storage room 24. However, the floor of the storage room 24 is flat and it is hard to discern the presence of the hidden anti-theft device in the place.

The motorcycle according to the present teaching is not limited to the above-described preferred embodiment.

The partition plate 29 does not have to be provided. In this case, the GPS unit 15 is fixed to the upper surface of the battery 16. The GPS unit 15 may be fixed to the back surface of the floor plate 45A of the partition plate 45. In this way, in the storage case 20, the storage room under the partition plate 45 corresponds to the "second storage room" according to the present teaching.

The unit case 39 may have a shape other than the flat square shape. Note however that the antenna 35 is preferably provided at the upper part in the unit case 39. In this way, the GPS antenna 35 can have improved receiving sensitivity.

Only one rear frames 7 may be provided. In this case, the rear frame 7 seen from above extends on the same axis as that of the front frame 6.

The frame is not limited to the arrangement according to the preferred embodiment described above. The frame needs only include a front frame arranged to extend obliquely downward from the front to the back and a rear frame arranged to extend obliquely upward from the front frame to the back. The head pipe and the front frame may be formed integrally or the front frame and the rear frame may be formed integrally. The front frame may extend obliquely downward at a plurality of angles or the rear frame may extend obliquely upward at a plurality of angles.

The seat is not limited to the arrangement in the above described preferred embodiment. The seat needs only be provided above the rear frame. For example, the main seat and the tandem seat may be provided flush with no step between them. Only the main seat may be provided without providing the tandem seat.

The storage box may extend under both the main seat and the tandem seat. The fuel tank may extend under both the main seat and the tandem seat. The storage box may be provided only under the main seat, and the fuel tank may be provided only under the tandem seat.

The guide rib is not limited to the arrangement in the above-described preferred embodiment. The guide rib may be only a part of the preferred embodiment or the guide rib does not have to be provided.

The motorcycle preferably includes a front frame arranged to extend obliquely downward from the front to the back, a rear frame arranged to extend obliquely upward from the front frame to the back, an engine provided under the rear part of the front frame, a seat provided above the rear frame, a storage box provided in a position higher than the engine and under the seat, and a fuel tank provided behind the storage box. The storage box includes a storage case having an opening at the upper end, a first storage room provided in the upper part of the storage case, a second storage room provided under the first storage room in the storage case, a first partition plate provided between the first and second storage rooms, and a GPS (Global Positioning System) unit provided in the second storage room. The GPS unit includes an antenna, a GPS receiver that calculates positional information based on GPS signals received by the antenna, and a position transmitter arranged to transmit a position signal indicating the positional information calculated by the GPS receiver.

The GPS unit is stored in the storage box. The storage box is provided in a position higher than the engine and in front of the fuel tank. Therefore, degradation in the receiving sensitivity of the antenna of the GPS unit is reduced. Furthermore, the storage box includes the first storage room separated by the first partition plate and the second storage room under the first room in the storage case. The GPS unit is provided in the second storage room. Therefore, when the seat is opened and the storage box is seen from the outside, the GPS unit positioned under the first partition plate is hardly discoverable from the outside. Therefore, a motorcycle including a GPS unit provided in a hardly discoverable position where degradation in its receiving sensitivity is less likely to be lowered can be provided.

The first storage room is separated from the second storage room including the GPS unit by the first partition plate, and therefore a storage space easy to handle can be provided.

The antenna is preferably provided in a position equal to or higher than the rear frames. Stated differently, the antenna is provided in a position equal to or higher than the rear frames when seen in a side view.

In this way, degradation in the receiving sensitivity of the antenna caused by the rear frames can be reduced. The front frame extends obliquely downward from the front to the back. The rear frames extend obliquely upward from the front frame to the back. The storage box is provided under the seat and in front of the fuel tank. Therefore, the front frame and the rear frame are arranged in a V-shape when seen in a side view and the GPS unit is provided near the bottom of the V shape. Therefore, when the antenna is provided in a position equal to or higher than the rear frames, a large space can be secured for the first storage room.

The GPS unit preferably has a substantially flat shape and is laid.

Since the GPS unit is laid, the height of the second storage room can be reduced. Therefore, when the upper surface of the first partition plate, in other words, when the bottom surface of the first storage room is formed to have a substantially flat shape in a position higher than the upper end of the GPS unit, a large space can be secured for the first storage room.

The storage box preferably further includes a third storage room provided in the storage case and under the second storage room, a second partition plate provided between the second and third storage rooms and having a through hole, a battery provided in the third storage room, and a wire passed through the through hole and connected between the GPS unit and the battery.

In this way, the GPS unit and the battery are adjacent to each other with the second partition plate therebetween. Therefore, the wire can be shorter. In addition, the wire is passed through the through hole, and therefore the space necessary for wiring can be reduced.

The first and second partition plates are preferably attached to the storage case in a detachable manner, and the GPS unit is attached to the second partition plate.

In this way, the GPS unit can be removed easily though it is provided in a hardly discoverable position.

The second partition plate preferably further includes a support member provided upright on the surface of the second partition plate. The GPS unit is supported at the support member so that a gap forms between the GPS unit and the second partition plate. In this example, the support member may be a plate type or any of other types. Only one such support member may be provided. The shape and the number of the support members are not limited as long as they can support the GPS unit.

In this way, vibration is not easily transmitted to the GPS unit.

The width of the storage case is preferably gradually reduced toward the front. The GPS unit further includes a unit case having a side surface provided with a connector to which a wire is connected and storing an antenna, a GPS receiver and a position transmitter. The GPS unit is attached to the second partition plate. When the GPS unit is attached to the second partition plate, the side surface is opposed to the inner side surface of the storage case and the distance between the side surface and the inner side surface of the storage case is reduced toward the front. The connector is provided more on the rear side than the center of the side surface. The antenna is provided in the upper part of the unit case.

In this case, if the GPS unit is attached upside down to the second partition plate, the connector of the unit case is provided more on the front side than the center of the side surface. The distance between the side surface of the unit case provided with the connector and the inner side surface of the storage case is reduced toward the front. Therefore, the space used to connect the wire to the connector is narrowed. Since it is difficult to connect the wire to the connector, the operator realizes that the GPS unit has been attached upside down. This prevents the GPS unit from being attached upside down. In the storage case having a shape whose width is gradually reduced toward the front, the GPS unit can be provided using the space effectively.

The second partition plate is preferably provided in a position substantially equal to or higher than the rear frame.

In this way, the antenna in the GPS unit is provided above the rear frames. Therefore, degradation in the receiving sensitivity of the antenna can be reduced.

Among others, the description above discloses an embodiment of a motorcycle 100 having an under bone type frame, a storage box 17 provided in a position higher than an engine E and arranged next to a fuel tank 14 in the front-back direction. A partition plate 45 in the storage box 17 separates a storage room 24 from a storage room 23 under the storage room 24. A GPS unit 15 is provided in the storage room 23. The antenna 35 in the GPS unit 15 is provided in a position substantially equal to or higher than rear frames 7. Therefore, the GPS unit 15 is provided in a hardly discoverable position where the receiving sensitivity is not easily lowered.

## Claims

1. Motorcycle, comprising:
a frame (1);
an engine (E) provided under the frame (1);
a seat (18) provided above the frame (1);
a storage box (17) provided in a position higher than the engine (E) and under the seat (18); and
a fuel tank (14) provided behind the storage box (17), wherein the storage box (17) comprises a storage case (20) with an opening at its upper end,
a first storage room (24) provided at an upper part of the storage case (20),
a second storage room (23) provided under the first storage room (24) in the storage case (20) and separated from the first storage room (24), wherein
the frame (1) has a front frame (6) extending obliquely downward from a front to a back of the motorcycle (100) and a rear frame (7) extending obliquely upward from the front frame (6) to the back, the front frame and the rear frame are arranged in a V-shape when seen in a side view,
**characterized by**
a Global Positioning System unit (15) including at least an antenna (35) and
provided in the second storage room (23), wherein the Global Positioning System unit (15) is provided near the bottom of the V-shape, and the the antenna (35) is provided in a position equal to or higher than the rear frame (7), when seen in a side view.

2. Motorcycle according to claim 1, **characterized in that** the engine (E) is provided under a rear part of the front frame (6), and/or the seat (18) is provided above the rear frame (7).

3. Motorcycle according to claim 1 or 2, **characterized in that** the storage box (17) further comprises a first partition plate (45) provided between the first and second storage rooms (24,23) to separate the first storage room (24) from the second storage room (23).

4. Motorcycle according to at least one of claims 1 to 3, **characterized in that** the Global Positioning System unit (15) further comprises a Global Positioning System receiver (36) configured to calculate positional information based on a Global Positioning System signal received by the antenna (35), and a position transmitter (37) configured to transmit a position signal indicating the positional information calculated by the Global Positioning System receiver (36) from the antenna (35).

5. Motorcycle according to at least one of claims 1 to 4, **characterized in that** the Global Positioning System unit (15) has a substantially flat shape and is laid.

6. Motorcycle according to at least one of claims 1 to 5, **characterized in that** the storage box (17) further comprises a third storage room (22) provided under the second storage room (23) in the storage case (20) and being separated from the first and second storage rooms (24,23).

7. Motorcycle according to claim 6, **characterized in that** the storage box (17) further comprises a second partition plate (29) provided between the second and third storage rooms (23, 22) to separate the second storage room (23) from the third storage room (22), and, preferably, the second partition plate (29) has a through hole (33), a battery (16) is provided in the third storage room (22), and a wire (41) passes through the through hole (33) and connects the Global Positioning System unit (15) and the battery (16).

8. Motorcycle according to claim 7, **characterized in that** the first and second partition plates (45, 29) are attached to the storage case (20) in a detachable manner, and, preferably, the Global Positioning System unit (15) is attached to the second partition plate (29).

9. Motorcycle according to claim 7 or 8, **characterized in that** the second partition plate (29) further comprises a support member (34A, 34B) provided upright on a surface of the second partition plate (29), and, preferably, the Global Positioning System unit (15) is supported by the support member (34A, 34B) and apart from the second partition plate (29).

10. Motorcycle according to at least one of claims 7 to 9, **characterized in that** the storage case (20) has a width gradually reduced toward the front, the Global Positioning System unit (15) preferably further comprises a unit case (39) having a side surface provided with a connector (44) to which the wire (41) is connected and storing the antenna (35), the Global Positioning System receiver (36), and the position transmitter (37), the Global Positioning System unit (15) is preferably attached to the second partition plate (29), and when the Global Positioning System unit (15) is attached to the second partition plate (29), the side surface is preferably opposed to an inner side surface of the storage case (20), a distance between a side surface and an inner side surface of the storage case (20) is reduced toward the front, the connector (44) is provided more on the rear side than the center of the side surface, and the antenna (35) is provided in an upper part of the unit case (39).

11. Motorcycle according to at least one of claims 7 to 10, **characterized in that** the second partition plate (29) is provided in a position substantially equal to or higher than the rear frame (7).

## Patentansprüche

1. Motorrad, das umfasst:
einen Rahmen (1);
einen Motor (E), der unter dem Rahmen (1) vorgesehen ist;
eine Sitz (18), der über dem Rahmen (1) vorgesehen ist;
eine Stau-Box (17), die in einer Position höher als der Motor (E) und unter dem Sitz (18) vorgesehen ist; und
einen Kraftstofftank (14), der hinter der Stau-Box (17) vorgesehen ist, wobei die Stau-Box (17) einen Stau-Kasten (20) umfasst, mit einer Öffnung an dessen oberen Ende, einen ersten Stau-Raum (24), der an einem oberen Teil des Stau-Kastens (20) vorgesehen ist,
einen zweiten Stau-Raum (23), der unter dem ersten Stau-Raum (24) in dem Stau-Kasten (20) vorgesehen ist, und getrennt von dem ersten Stau-Raum (24) ist, wobei der Rahmen (1) einen vorderen Rahmen (6) hat, der sich schräg nach unten von einer Vorder-Seite zu einer Rück-Seite des Motorrads (100) erstreckt, und einen hinteren Rahmen (7) hat, der sich schräg nach oben von dem vorderen Rahmen (6) zu der Rück-Seite erstreckt, der vordere Rahmen und der hintere Rahmen sind in einer V-Form angeordnet, wenn in einer Seiten-Ansicht betrachtet,
**gekennzeichnet durch** eine Global-Positions-System-Einheit (15), die zumindest eine Antenne (35) beinhaltet, und in dem zweiten Stau-Raum (23) vorgesehen ist,
wobei die Global-Positions-System-Einheit (15) nahe dem Boden der V-Form vorgesehen ist, und die Antenne (35) ist in einer Position gleich oder höher als der hintere Rahmen (7) vorgesehen, wenn in einer Seiten-Ansicht betrachtet.

2. Ein Motorrad gemäß Anspruch 1, **dadurch gekennzeichnet dass** der Motor (E) unter einem hinteren Teil des vorderen Rahmens (6) vorgesehen ist, und/oder der Sitz (18) ist oberhalb des hinteren Rahmens (7) vorgesehen.

3. Ein Motorrad gemäß Anspruch 1 oder 2, **dadurch gekennzeichnet dass** die Stau-Box (17) weiterhin eine erste Partitions-Platte (45) umfasst, die zwischen den ersten und zweiten Stau-Räumen (24, 23) vorgesehen ist, um den ersten Stau-Raum (24) von dem zweiten Stau-Raum (23) zu trennen.

4. Motorrad gemäß zumindest einem der Ansprüche 1 bis **3, dadurch gekennzeichnet dass** die Global-Positionierungs-System-Einheit (15) weiterhin einen Global-Positionierungs-System-Empfänger (36) umfasst, der konfiguriert ist um Positions-Informationen auf Grundlage eines Global-Positionierungs-System-Signals, das durch die Antenne (35) empfangen ist, zu berechnen, und einen Positions-Übertrager (37), der konfiguriert ist um eine Positions-Signal welches die Positions-Informationen anzeigt, die durch den Global-Positionierungs-System-Empfänger (36) berechnet sind, von der Antenne (35) zu übertragen.

5. Motorrad gemäß zumindest einem der Ansprüche 1 bis 4, **dadurch gekennzeichnet dass** die Global-Positionierungs-System-Einheit (15) eine im Wesentlichen flache Form hat und gelegt ist.

6. Motorrad gemäß zumindest einem der Ansprüche 1 bis 5, **dadurch gekennzeichnet dass** die Stau-Box (17) weiterhin einen dritten Stau-Raum (22) umfasst, der unter dem zweiten Stau-Raum (23) in dem Stau-Kasten (20) vorgesehen ist, und getrennt von den ersten und zweiten Stau-Räumen (24, 23) ist.

7. Motorrad gemäß Anspruch 6, **dadurch gekennzeichnet dass** die Stau-Box (17) weiterhin eine zweite Partitions-Platte (29) umfasst, die zwischen den zweiten und dritten Stau-Räumen (23, 22) vorgesehen ist um den zweiten Stau-Raum (23) von dem dritten Stau-Raum (22) zu trennen, und bevorzugt die zweite Partitions-Platte (29) ein Durchgangsloch (33) hat, eine Batterie (16) ist in dem dritten Stau-Raum (22) vorgesehen, und ein Kabel (41) erstreckt die durch das Durchgangsloch (33) und verbindet die Global-Positionierungs-System-Einheit (15) und die Batterie (16).

8. Motorrad gemäß Anspruch 7, **dadurch gekennzeichnet dass** die ersten und zweiten Partitions-Platten (45, 29) an dem Stau-Kasten (20) in entfernbarer Weise angebracht sind, und vorzugsweise ist die Global-Positionierungs-System-Einheit (15) an der zweiten Partitions-Platte (29) angebracht.

9. Motorrad gemäß Anspruch 7 oder 8, **dadurch gekennzeichnet dass** die zweite Partitions-Platte (29) weiterhin ein Lagerelement (34A, 34B) umfasst, dass aufrecht an einer Fläche der zweiten Partitions-Platte (29) vorgesehen ist, und vorzugsweise ist die Global Positionierungs System Einheit(15) durch das Lagerelement (34A, 34B) gelagert und beabstandet von der zweiten Partitions-Platte (29).

10. Motorrad gemäß zumindest einem der Ansprüche 7 bis 9, **dadurch gekennzeichnet dass** der Stau-Kasten (20) eine Breite hat, die sich graduell zu der Vorder-Seite verringert, die Global-Positionierungs-System-Einheit (15) vorzugsweise weiterhin einen Einheit-Kasten (39) umfasst, der eine Seiten-Fläche hat, die mit einem Verbinder (44) vorgesehen ist, mit dem das Kabel (41) verbunden ist, und die Antenne (35), den Global-Positionierungs-System-Empfänger (36) und den Positions-Übertrager (37) lagert, die Global-Positionierungs-System-Einheit (15) ist vorzugsweise an der zweiten Partitions-Platte (29) angebracht, und wenn die Global-Positionierungs-System-Einheit (15) an der zweiten Partitions-Platte (29) angebracht ist, ist die Seiten-Fläche vorzugsweise gegenüber zu einer inneren Seiten-Fläche des Stau-Kastens (20), ein Abstand zwischen der Seiten-Fläche und einer inneren Seiten-Fläche des Stau-Kastens (20) ist zu der Vorder-Seite reduziert, der Verbinder (44) ist mehr an einer Rück-Seite als die Mitte der Seiten-Fläche vorgesehen, und die Antenne (35) ist in einem oberen Teil des Einheit-Kasten (39) vorgesehen.

11. Motorrad gemäß zumindest einem der Ansprüche 7 bis 10, **dadurch**
**gekennzeichnet dass** die zweite Partitions-Platte (29) in ein Position vorgesehen ist, die im Wesentlichen gleich zu oder höher als der hinterer Rahmen (7) ist.

## Revendications

1. Motocyclette, comprenant :
un cadre (1) ;
un moteur (E) prévu sous le cadre (1) ;
un siège (18) prévu au-dessus du cadre (1) ;
une boîte de rangement (17) disposée en une position supérieure au moteur (E) et sous le siège (18) ; et
un réservoir de carburant (14) disposé derrière la boîte de rangement (17), où la boîte de rangement (17) comprend un boîtier de rangement (20) avec une ouverture sur son extrémité supérieure, un premier espace de rangement (24) disposé au niveau d'une partie supérieure du boîtier de rangement (20), un second espace de rangement (23) disposé sous le premier espace de rangement (24) dans le boîtier de rangement (20) et séparé du premier espace de rangement (24), où le cadre (1) présente un cadre avant (6) s'étendant obliquement vers le bas depuis l'avant vers l'arrière de la motocyclette (100) et un cadre arrière (7) s'étendant obliquement vers le haut depuis le cadre avant (6) vers l'arrière, le cadre avant et le cadre arrière sont disposés en forme de V lorsqu'observés en vue latérale,
**caractérisée par**
une unité de Système de géolocalisation (15) incluant au moins une antenne (35) et prévue dans le second espace de rangement (23), où l'unité de Système de géolocalisation (15) est prévue près du fond de la forme en V, et l'antenne (35) est prévue dans une position égale ou supérieure au cadre arrière (7), lorsqu'observée en vue latérale.

2. Motocyclette selon la revendication 1, **caractérisée en ce que** le moteur (E) est disposé sous une partie arrière du cadre avant (6), et/ou le siège (18) est disposé au-dessus du cadre arrière (7).

3. Motocyclette selon la revendication 1 ou 2, **caractérisée en ce que** la boîte de rangement (17) comprend en outre une première plaque de partition (45) prévue entre le premier et le second espaces de rangement (24, 23) pour séparer le premier espace de rangement (24) du second espace de rangement (23).

4. Motocyclette selon au moins l'une des revendications 1 à 3, **caractérisée en ce que** l'unité de Système de géolocalisation (15) comprend en outre un récepteur de Système de géolocalisation (36) configuré pour calculer l'information de position sur la base d'un signal de Système de géolocalisation reçu par l'antenne (35), et un transmetteur de position (37) configuré pour transmettre un signal de position indiquant l'information de position calculée par le récepteur de Système de géolocalisation (36) depuis l'antenne (35).

5. Motocyclette selon au moins l'une des revendications 1 à 4, **caractérisée en ce que** l'unité de Système de géolocalisation (15) présente une forme sensiblement plane et est couchée.

6. Motocyclette selon au moins l'une des revendications 1 à 5, **caractérisée en ce que** la boîte de rangement (17) comprend en outre un troisième espace de rangement (22) prévu sous le second espace de rangement (23) dans le boîtier de rangement (20) et séparé du premier et du second espaces de rangement (24, 23) .

7. Motocyclette selon la revendication 6, **caractérisée en ce que** la boîte de rangement (17) comprend en outre une seconde plaque de partition (29) prévue entre le second et le troisième espaces de rangement (23, 22) pour séparer le second espace de rangement (23) du troisième espace de rangement (22), et, préférablement, la seconde plaque de partition (29) présente un trou traversant (33), une batterie (16) est prévue dans le troisième espace de rangement (22), et un câble (41) passe à travers le trou traversant (33) et connecte l'unité de Système de géolocalisation (15) et la batterie (16).

8. Motocyclette selon la revendication 7, **caractérisée en ce que** la première et la seconde plaques de partition (45, 29) sont fixées au boîtier de rangement (20) de manière à pouvoir être détachées, et, préférablement, l'unité de Système de géolocalisation (15) est fixée à la seconde plaque de partition (29).

9. Motocyclette selon la revendication 7 ou 8, **caractérisée en ce que** la seconde plaque de partition (29) comprend en outre un élément formant support (34A, 34B) prévu verticalement sur une surface de la seconde plaque de partition (29), et, préférablement, l'unité de Système de géolocalisation (15) est soutenue par l'élément formant support (34A, 34B) et écartée de la seconde plaque de partition (29).

10. Motocyclette selon au moins l'une des revendications 7 à 9, **caractérisée en ce que** le boîtier de rangement(20) possède une largeur progressivement réduite vers l'avant, l'unité de Système de géolocalisation (15) préférablement comprend en outre un boîtier d'unité (39) ayant une surface latérale prévue avec un connecteur (44) auquel le câble (41) est connecté et le rangement de l'antenne (35), le récepteur de Système de géolocalisation (36), et le transmetteur de position (37), l'unité de Système de géolocalisation (15) est préférablement fixée à la seconde plaque de partition (29), et lorsque l'unité de Système de géolocalisation (15) est fixée à la seconde plaque de partition (29), la surface latérale est préférablement opposée à une surface latérale interne du boîtier de rangement (20), une distance entre une surface latérale et une surface latérale interne du boîtier de rangement (20) est réduite vers l'avant, le connecteur (44) est prévu plus sur le côté arrière qu'au centre de la surface latérale, et l'antenne (35) est prévue en une partie supérieure du boîtier d'unité (39).

11. Motocyclette selon au moins l'une des revendications 7 à 10, **caractérisée en ce que** la seconde plaque de partition (29) est prévue en une position sensiblement égale ou supérieure au cadre arrière (7).
